# EUROPEAN PATENT SPECIFICATION

(11) **EP 1 534 498 B1**
(45) Date of publication and mention of the grant of the patent: **24.02.2010**
(21) Application number: 03730268.4
(22) Date of filing: 12.06.2003
(51) Int. Cl.: A46B 3/04, B29C 47/02

(54) **METOD FOR MANUFACTURING A CASSETTE BRUSH AND A CASSETTE BRUSH**
VERFAHREN ZUR HERSTELLUNG EINER B RSTENKASSETTE UND KASSETTENB RSTE
PROCEDE DE FABRICATION DE BROSSE A CASSETTE ET BROSSE A CASSETTE

(30) Priority: 23.07.2002 FI 20021401
(43) Date of publication of application: 01.06.2005
(73) Proprietor: Sajakorpi OY, 33101 Tampere (FI)
(72) Inventor: KUIVIKKO, Reijo, FIN-33720 Tampere (FI)
(74) Representative: Kangasmäki, Reijo Holger
(86) International application number: PCT/FI2003/000466
(87) International publication number: WO 2004/009338

(56) References cited:
- WO-A-03/037135
- WO-A1-87/03180
- FI-B- 102 507
- US-A- 4 325 900
- US-A- 4 325 901
- US-A- 4 325 902
- US-B1- 6 260 927

## Description

The invention relates to a method for manufacturing a cassette brush, which together with several consistent ones is meant for making a brush that is to be attached to a brush mounting in a sweeping machine, the cassette brush comprises a bristle component and a stem component as a single piece structure made of plastic based material, said stem component connecting bristles of the bristle component and having in a built-in manner first of all a support element for supporting the bristles of the bristle component and on the other hand a coupling element for attaching the cassette brush to the brush mounting of the sweeping machine. The cassette brush is manufactured from an essentially elongated brush preform, the bristles therein being bonded by means of a fusion process bonding their ends to each other, whereafter the plastic based material in a substantially flowing state is extruded into contact with the fusion flange of the brush preform for manufacturing the cassette brush's stem component by means of a mould assembly from said material as it solidifies

Ever since the 1970's, various sweeping machines have employed brush elements of a brush ring type, which are used for assembling the actual brush of a sweeping machine. However, in sweeping machines used particularly for airport sweeping operations, the use of brushes compiled from brush rings has diminished over the recent years as so-called cassette brushes have become more and more popular, a particular advantage offered by the latter over the brush ring system being a convenient and quick installation. Thus, the brush is assembled simply by inserting the cassette brushes endwise into locking grooves present in the machine's brush mounting.

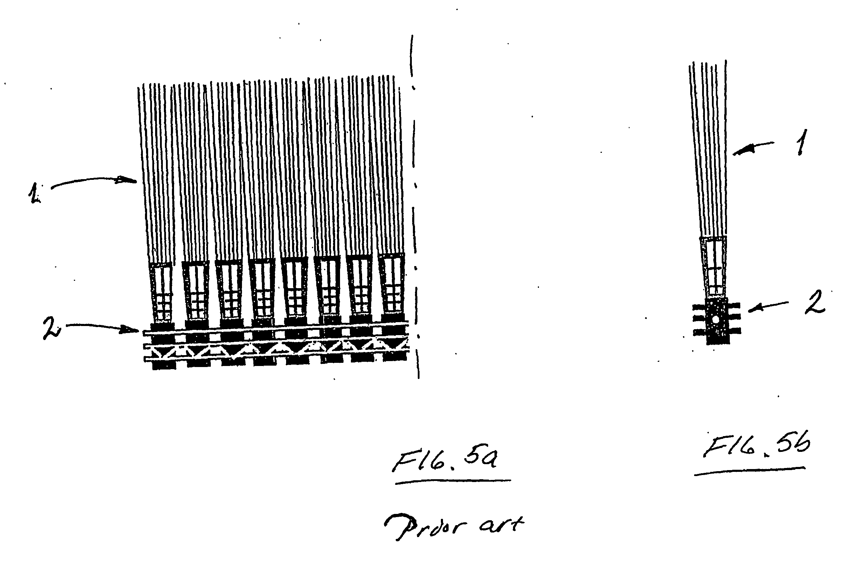

For example, US patent 5, 383, 245 discloses one cassette brush embodiment of this type, wherein the bristles of a bristle component are attached to the mounting of a cassette brush in the form of bristle tufts by means of a plastic sleeve and a locking wire, as shown in front and side views in figs. 5a and 5b respectively.

However, the above type of cassette brush solution involves quite serious drawbacks. Firstly, the interspace between bristle tufts in a brush compiled therefrom always leaves a streaky sweeping trail as a result of bristles wearing down. Another major drawback is that the number of bristles contributing to sweeping performance is always lower in cassette brushes than e.g. in a disc brush system, nor is it possible to increase the number of bristles in the above type solution as the employed plastic sleeves cannot accommodate an abundant number of additional bristles. In principle, the above type solution is unnecessarily complicated also in terms of its construction, which is why its assembly requires a plurality of separate assembly operations.

Finnish patent application No. 20012112 further discloses a solution, which is significantly improved with respect to that described in the above-cited US patent and according to which the stem component is manufactured in forming plastics. Hence, the cassette brush is manufactured by placing a brush preform, which constitutes the bristle component, in a casting mould which is supplied with forming plastics in a fluid state, which, upon solidifying to a solid state, secures the bristle component to a stem component composed of said plastics. This enables producing an extremely integrated cassette brush, which, under any circumstances, does not allow an unintentional release of bristles, regardless of whether the bristle component is provided with plastic and/or metallic bristles; it is such secure attachment of bristles which is a particularly significant requirement, especially in an airport sweeping machine or the like. In addition, the discussed solution enables the manufacture of brush assemblies substantially more homogeneous than those available at present, thus enabling the use of cassette brushes at a high sweeping performance for a significantly longer time than their prior known counterparts. In this conjunction, however, it has been discovered as one practical observation that there are problems associated with casting technology, which is why the stem component, and joint mechanisms present therein, must be constructed with a particular care because of casting shrinkages. In addition, the discussed solution has utilized a totally integral stem component, which is why the material consumption is unnecessarily high.

On the other hand, US 4,325,902 discloses a method of manufacturing brush components, which is based on the idea that the bristles are arranged substantially uniformly and parallel to each other, whereafter the opposite ends of the bristles are connected by extruding plastics material over the projecting ends of the bristles to hold them together. In an other solution, two spaced pairs of belts are used to advance the bristles into an extruder and plastics material is extruded down the center of the bristles either from each side or in sufficient amounts to penetrate between the bristles completely to form a stem component. Furthermore US 6,260,927 discloses a method for manufacturing a brush ring, whereby the bristles are firstly connected to each other at one end to form a brush preform, whereafter plastic paste is fed in an essentially solid state onto said one end of the bristles at the top edge of the preform, the plastic paste being fed in a ready finished shape. After that the brush ring is worked to its final shape utilizing a press mold assembly to form at least the frame or stem part of the brush ring from the plastic paste. Furthermore WO 03/037135 discloses a method for manufacturing of a cassette brush and a cassette brush. The stem component of a cassette brush, being produced according to this method, is made from forming plastics, whereby the cassette brush is manufactured by placing the bristle component, provided with an array of bristles extending continuously in the longitudinal direction, in a casting mold supplied with forming plastics in a fluid state, which, upon solidifying to a solid state, bonds the bristle component to the stem component. This solution may be carried out in an alternative way by using a separate shell portion, which is placeable in the casting mold in order to get filled with forming plastics coupling the bristle component to the stem component.

US 6,260,927 and WO-A-8703180 both disclose a method in accordance with the preamble of claim 1 and a cassette brush in accordance with the preamble of claim 9.

All of the above manufacturing techniques and brush products, being produced accordingly, make possible uniform stem components being totally filled with plastics for the part of their coupling element.

It is an object of the present invention to provide a decisive improvement regarding the above problems and, thus, to raise essentially the existing state of the art. In order to fulfill this object, a method of the invention is principally characterized in that the extrusion mechanism produces an at least partially hollow stem component in a cross-sectional sense on the opposite sides of the bristle component by means of a calibration element, having its complementary surfaces partially formed of the opposite side faces of the brush preform.

The most important benefits gained by a method of the invention included, first of all, the simplicity and efficiency of manufacture as a cassette brush is produced in one "strike" as a totally integrated unit, whereby the hollow stem component of a manufactured cassette brush has a benefit of enabling also an optimally low consumption of raw material. On the other hand, forming the stem component and the bristle component of a cassette brush from the same plastic-based material, such as polypropylene, for example, enables the manufacture of an extremely integrated and totally recyclable cassette brush, which does not allow, in any conditions, an unintentional loss of bristles. In addition, by virtue of a method of the invention, it is possible to manufacture brush assemblies substantially more homogeneous than those available at present, the cassette brushes included therein being operable at a high sweeping performance for a substantially longer time than their prior art counterparts, despite the fact that the inventive method enables production while effectively minimizing the consumption of an employed plastic material.

Preferred applications for a method of the invention are set forth in the dependent claims directed thereto.

The invention relates also to a cassette brush, as defined more accurately in the preamble of the independent claim directed thereto, the essentially characterizing features thereof being set forth in the characterizing section of the same claim.

The most important benefits gained by a cassette brush of the invention include the simplicity of its construction and operation, the invention enabling an optimally lightweight cassette brush construction as the plastic material used in manufacturing is minimized by virtue of the cassette brush's hollow housing design. Thus, the brush, assembled from cassette brushes having a remarkably simpler construction than those available at present, enables sustaining an optimal sweeping result for significantly longer than what is achieved with currently available solutions. This is particularly by virtue of the fact that the cassette brush is provided with a lengthwise continuous array of bristles, whereby the mutual distance between bristle bunches present in cassette brushes of the above-discussed type, or wearing of the bristles, no longer causes similar problems as the array of bristles in a cassette brush is wearing down. By virtue of this, on the other hand, as little residual bristle wire material as possible is left in cassette brushes which are worn out, yet reusable e.g. as a result of roughening. By virtue of the invention, it is also possible to vary the width of a bristle component present in a cassette brush for further contributing to the durability of a cassette brush, this possibility being non-existent in cassette brushes consisting of bristle tufts assembled by means of plastic sleeves. In addition, the brush, assembled from cassette brushes of the invention, provides a sweeping action which is remarkably more homogeneous than that of currently available cassette brushes and, furthermore, there is practically no risk of the sweeping action releasing harmful material for example on a runway, since there is a very strong bond or attachment between a bristle component and a stem-component forming plastic material.

Preferred embodiments for a cassette brush of the invention are set forth in the dependent claims directed thereto.

The invention will be described in detail in the following specification with reference to the accompanying drawings, in which
- fig. 1: shows one preferred manufacturing process made possible by a method of the invention,
- fig. 2: shows, as one preferred embodiment, a section along 2-2 in fig. 1,
- fig. 3: shows, as one preferred embodiment, a section along 3-3 in fig. 1,
- fig. 4: shows one preferred cassette brush of the invention, and
- figs. 5a and 5b: illustrate a traditional cassette brush, assembled from bristle tufts by means of plastic sleeves and locking wires, in front and side views, respectively.

The invention relates to a method for manufacturing a cassette brush, which together with several consistent ones is meant for making a brush that is to be attached to a brush mounting in a sweeping machine. The cassette brush comprises a bristle component 1 and a stem component 2 as a single piece structure made of plastic based material, said stem component connecting bristles 1a of the bristle component 1 and having in a built-in manner first of all a support element 2a for supporting the bristles 1a of the bristle component 1 and on the other hand a coupling element 2b for attaching the cassette brush to the brush mounting of the sweeping machine. The cassette brush is manufactured from an essentially elongated brush preform 1', the bristles 1a therein being bonded by means of a fusion process bonding their ends to each other, whereafter the plastic based material in a substantially flowing state is extruded into contact with the fusion flange 1's of the brush preform 1' for manufacturing the cassette brush's stem component 2 by means of a mould assembly from said material as it solidifies. The cassette brush is manufactured by bonding the stem component 2 to the bristle component 1 by means of an extrusion mechanism that produces an at least partially hollow stem component 2 in a cross-sectional sense on the opposite sides of the bristle component 1 by means of a calibration element III, having its complementary surfaces V partially formed of the opposite side faces 1'p of the brush preform 1'.

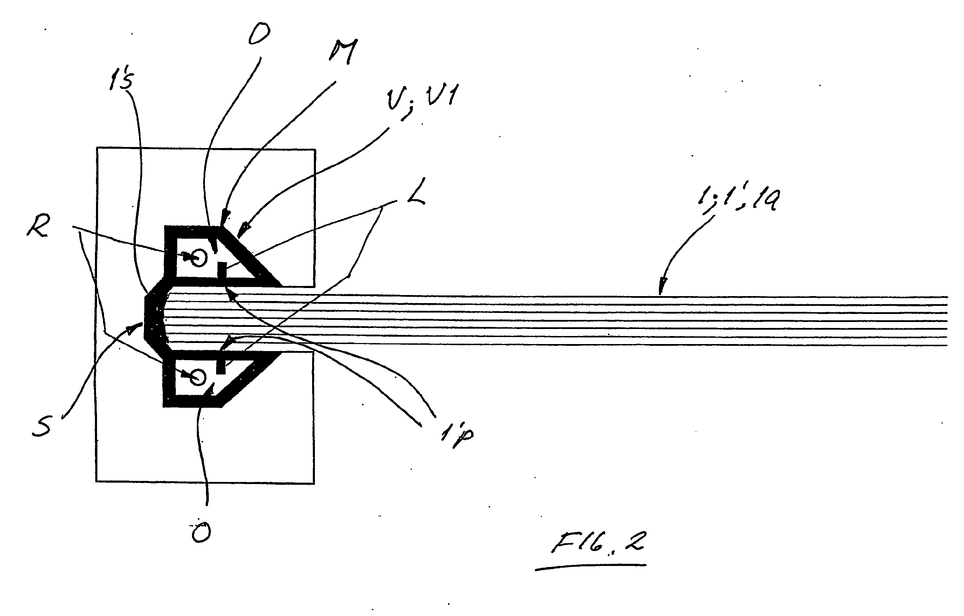

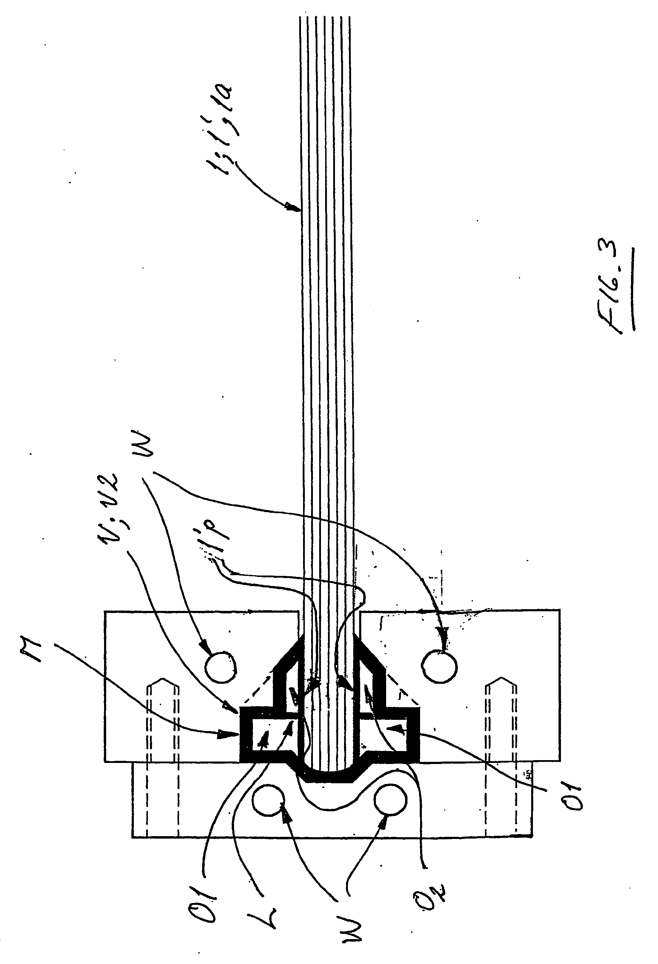

In a preferred embodiment, the stem component 2 is made hollow, both in terms of its coupling element 2a and its support element 2b, by using at the start of extrusion an extrusion profile M as shown e.g. in fig. 2, which is hollow on the opposite sides of the brush preform 1' and provided with locking faces L, by means of which the stem component 2 is formed on the opposite sides of the bristle component 1 with two separate recesses 01, 02 on each side by forcing the outer edge of the extrusion profile M thereagainst at the end of extrusion, as shown e.g. in fig. 3.

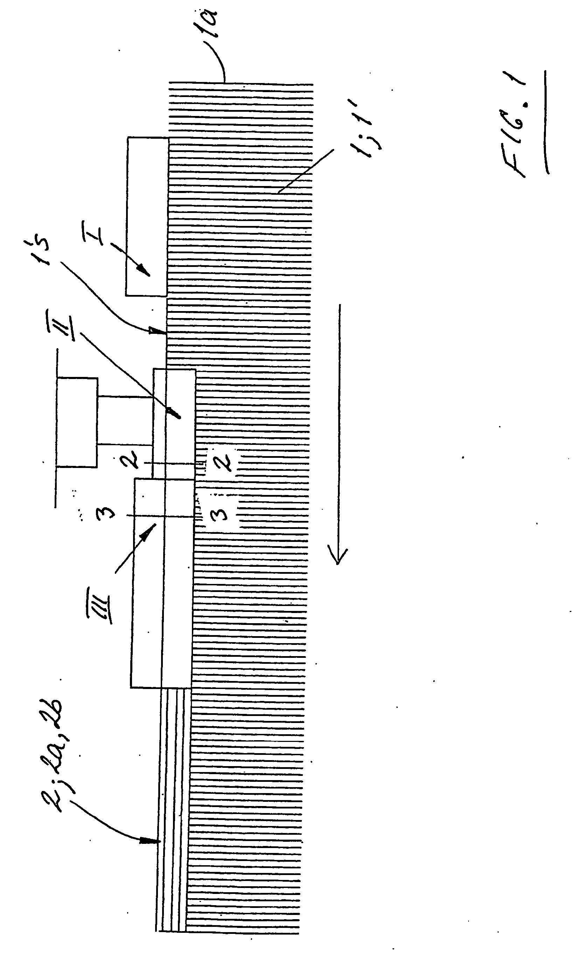

In reference to a preferred manufacturing process depicted especially in fig. 1, the bristles 1a constituting the bristle component 1 are first conveyed to a fusion resistance I, wherein the same are fused together at one end thereof, after which the resulting brush preform 1' is fed to an extruder die element II, wherein on top of the brush preform's 1' fusion flange 1's is extruded a plastic preform profile M as shown in fig. 2, which is constituted by recesses 0 present on the opposite sides of the brush preform 1' and connected to each other by a web element S.

This is followed by feeding the brush preform 1' collared with the plastic preform profile M to a calibration element III, wherein an under- or overpressure is generated inside the plastic preform profile M, whereby the presently molten plastic preform profile M compresses over its outer shell against the complementary surfaces V of the calibration mechanism and over its inner part against the side faces 1'p of the brush preform 1'. As a result, the brush preform's 1' fusion flange 1's as well as the extruded plastic profile preform's M web element S are welded together.

In a further preferred embodiment, referring to the process illustration shown in fig. 1, the calibration mechanism III has its complementary surface V1 preferably designed over its first section, as shown in fig. 2, for a configuration complementary to the extruded plastic profile preform M and, over its final section, in a preferred embodiment as shown in fig. 3, for a constricted configuration V2, for providing the stem component's 2 two-part 01, 02 housing structure on the opposite sides of the bristle component 1.

In a preferred embodiment of the invention, the calibration element III is provided with cooling, as a result of which the plastic profile preform M, and the brush preform's fusion flange 1's welded internally therewith, are cooled, preferably by virtue of the water- or air-cooled complementary surfaces V1, V2, to their desired configuration. In a particularly preferred embodiment, the extrusion is implemented by using water-cooled overpressure technology by supplying compressed air to the interior of the plastic profile preform M through injection holes R present in the calibration mechanism III and by cooling it with a water circulation conducted by way of a flow channel system W included in the calibration mechanism.

In a further preferred embodiment, the cassette brush's bristle component 1 and stem component 2 are manufactured from a recyclable and essentially one manufacturing material, such as polypropylene or the like.

The invention relates also to a cassette brush, which is meant together with several consistent ones for making a brush that is to be attached to a brush mounting in a sweeping machine, whereby said cassette brush comprises a bristle component 1 and a stem component 2 as a single piece structure made of plastic based material. The stem component connects bristles 1a of the bristle component and has in a built-in manner first of all a support element 2a for supporting the bristles 1a of the bristle component 1 and on the other hand a coupling element 2b for attaching the cassette brush to the brush mounting of the sweeping machine. The cassette brush is made of an essentially elongated brush preform 1', the bristles 1a thereof being bonded by their ends to each other and combined with said stem component 2. The cassette brush's stem component 2, being formed of said plastic based material that has been extruded into contact with the fusion flange 1's of the brush preform 1' , is hollow at least for the part of its coupling element 2b in a cross-sectional sense on the opposite sides of the bristle component 1.

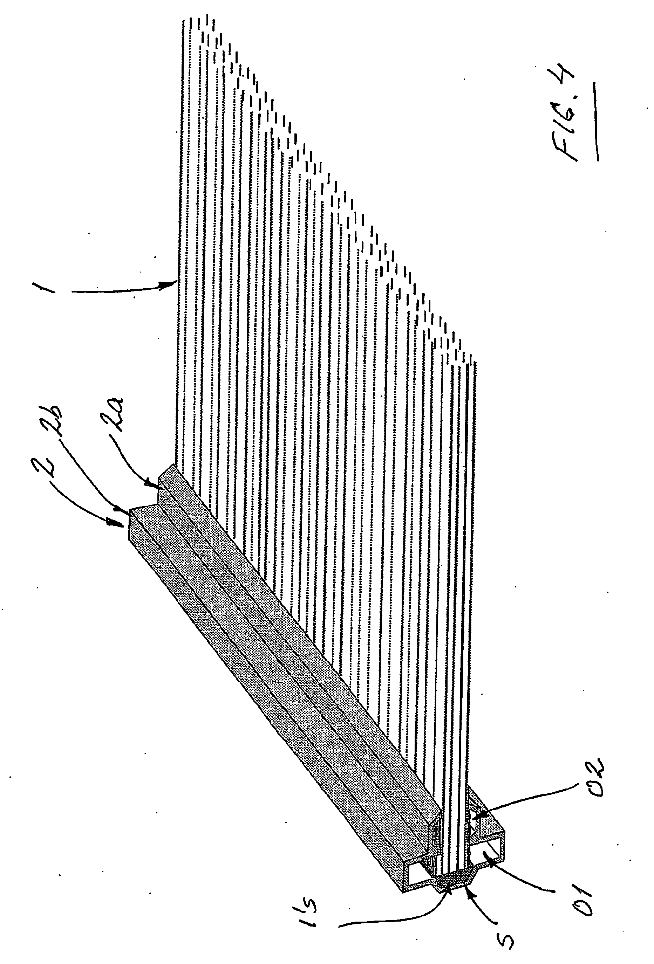

In a particularly preferred embodiment, as shown e.g. in figs. 3 and 4, the cassette brush's stem component 2 is hollow, both in terms of its coupling element 2a and its support element 2b, by using in its manufacture an extrusion profile M as shown e.g. in fig. 2, which is hollow 0 on the opposite sides and provided with locking faces L, by means of which the stem component 2 is formed on the opposite sides of the bristle component 1 with two separate recesses 01, 02 on each side by forcing and fusing the outer edge of the extrusion profile M against the locking faces L.

It is obvious that the invention is not limited to the embodiments discussed or described above, but it can be varied within the scope of the basic inventive concept according to given demands and operating conditions. Hence, first of all, it is obvious that the configuration of a stem component may be other than what is described above, depending on a current way of coupling the same with the brush mounting of a sweeping machine. In addition, its dimensions and appearance are naturally subject to variations, depending on the dimensions of a presently manufactured cassette brush. Applying the inventive method, it is possible to manufacture a bristle component provided, on the one hand, with arrays of bristles extending discontinuously on the stem component of a cassette brush, or else, for example, in such a way that the bristle component spirals along the stem component with a gentle helix. Furthermore, as opposed to the above-described embodiments, it is also possible to assemble a bristle component in such a way that, in lateral direction, it carries even a larger number of alternating blocks of plastic bristles, with some metal bristles possibly dispersed amongst the same.

## Claims

1. A method for manufacturing a cassette brush, which together with several consistent ones is meant for making a brush that is to be attached to a brush mounting in a sweeping machine, whereby said cassette brush comprises a bristle component (1) and a stem component (2) as a single piece structure made of plastic based material, said stem component connecting bristles (1a) of the bristle component (1) and having in a built-in manner first of all a support element (2a) for supporting the bristles (1a) of the bristle component (1) and on the other hand a coupling element (2b) for attaching the cassette brush to the brush mounting of the sweeping machine, the cassette brush being manufactured from an essentially elongated brush preform (1'), the bristles (1a) therein being bonded by means of a fusion process bonding their ends to each other, whereafter the plastic based material in a substantially flowing state is extruded into contact with the fusion flange (1's) of the brush preform (1') for manufacturing the cassette brush's stem component (2) by means of a mould assembly from said material as it solidifies, whereby the cassette brush is manufactured by bonding the stem component (2) to the bristle component (1) by means of an extrusion mechanism, **characterized in that** the extrusion mechanism produces an at least partially hollow stem component (2) in a cross-sectional sense on the opposite sides of the bristle component (1) by means of a calibration element (III), having its complementary surfaces (V) partially formed of the opposite side faces (1'p) of the brush preform (1').

2. A method as set forth in claim 1, **characterized in that** the stem component (2) is made hollow, both in terms of its coupling element (2a) and its support element (2b), by using at the start of extrusion an extrusion profile (M), which is hollow (0) on the opposite sides of the brush preform (1') and provided with locking faces (L), by means of which the stem component (2) is formed on the opposite sides of the bristle component (1) with two separate recesses (01, 02) on each side by forcing the outer edge of the extrusion profile (M) thereagainst at the end of extrusion.

3. A method as set forth in claim 1 or 2, **characterized in that** the bristles (1a) constituting the bristle component (1) are first conveyed to a fusion resistance (I), wherein the same are fused together at one end thereof, after which the resulting brush preform (1') is fed to an extruder die element (II), wherein on top of the brush preform's (1') fusion flange (1's) is extruded a plastic preform profile (M), which is constituted by recesses (0) present on the opposite sides of the brush preform (1') and connected to each other by a web element (S).

4. A method as set forth in claim 3, **characterized in that** the brush preform (1') collared with the plastic preform profile (M) is fed to the calibration element (III), wherein a pressure is generated inside the plastic preform profile (M), whereby the presently molten plastic preform profile (M) compresses over its outer shell against the complementary surfaces (V) of the calibration element and over its inner part against the side faces (1'p) of the brush preform (1'), and whereby the brush preform's (1') fusion flange (1's) as well as the extruded plastic profile preform's (M) web element (S) are welded together.

5. A method as set forth in any of claims 2-4, **characterized in that**, over its first section, the calibration element (III) has its complementary surface (V; V1) preferably designed for a configuration complementary to the extruded plastic profile preform (M) and, over its final section, for a constricted configuration (V; V2), for providing the stem component's (2) two-part housing structure (01, 02) on the opposite sides of the bristle component (1) .

6. A method as set forth in any of the preceding claims 3-5, **characterized in that** the calibration element (III) is provided with cooling, a result of which the plastic profile preform (M) pressing against the complementary surfaces (V) therein, and the brush preform's (1') fusion flange (1's) fusing into its web element (S), are cooled, preferably encouraged by the water- or air-cooled complementary surfaces (V1, V2), to their desired configuration.

7. A method as set forth in any of the preceding claims 1-6, **characterized in that** the extrusion is implemented by using water-cooled overpressure technology by supplying compressed air to the interior of the plastic profile preform (M) through injection holes (R) present in the calibration element (III) and by cooling it with a water circulation conducted by way of a flow channel system (W) included in the calibration mechanism.

8. A method as set forth in any of the preceding claims 1-7, **characterized in that** the bristle component (1) and the stem component (2), included in the cassette brush, are manufactured from a recyclable and essentially one manufacturing material, such as polypropylene or the like.

9. A cassette brush, which is meant together with several consistent ones for making a brush that is to be attached to a brush mounting in a sweeping machine, whereby said cassette brush comprises a bristle component (1) and a stem component (2) as a single piece structure made of plastic based material, said stem component connecting bristles (1a) of the bristle component and having in a built-in manner first of all a support element (2a) for supporting the bristles (1a) of the bristle component (1) and on the other hand a coupling element (2b) for attaching the cassette brush to the brush mounting of the sweeping machine, the cassette brush being made of an essentially elongated brush preform (1'), the bristles (1a) thereof being bonded by their ends to each other and combined with said stem component (2), said cassette brush's stem component (2), being formed of said plastic based material that has been extruded into contact with the fusion flange (1's) of the brush preform (1'), **characterized in that** said cassette brush's stem component is hollow at least for the part of its coupling element (2b) in a cross-sectional sense on the opposite sides of the bristle component (1).

10. A cassette brush as set forth in claim 9, **characterized in that** the cassette brush's stem component (2) is hollow, both in terms of its coupling element (2a) and its support element (2b), by using in its manufacture an extrusion profile (M), which is hollow (0) on the opposite sides and provided with locking faces (L), by means of which the stem component (2) is formed on the opposite sides of the bristle component (1) with two separate recesses (01, 02) on each side by forcing and fusing the outer edge of the extrusion profile (M) against the locking faces (L).

## Patentansprüche

1. Ein Verfahren zur Herstellung einer Bürstenkassette, die zusammen mit mehreren mit dieser übereinstimmenden dazu gedacht ist, eine Bürste zu bilden, die an einer in einer Kehrmaschine befindlichen Bürstenhalterung zu befestigen ist, wobei die genannte Bürstenkassette aus einem Borstenteil (1) und einem Stielteil (2) in einteiligem Aufbau aus einem Material auf Kunststoffbasis besteht, das genannte Stielteil die Borsten (1a) des Borstenteils (1) verbindet und zunächst über ein eingebautes Stützelement (2a) zum Stützen der Borsten (1a) des Borstenteils (1) und andererseits ein Kupplungselement (2b) zum Befestigen der Bürstenkassette an der Bürstenhalterung der Kehrmaschine verfügt, wobei die Bürstenkassette aus einer im Wesentlichen länglichen Bürstenvorform (1') hergestellt wird, wobei die darin befindlichen Borsten (1a) mittels eines deren Enden miteinander verklebenden Schmelzprozesses verbunden werden, wonach das Material auf Kunststoffbasis in einem im Wesentlichen fließenden Zustand extrudiert wird, so dass es in Kontakt mit dem Verbindungsflansch (1's) der Bürstenvorform (1') kommt, um mittels einer Gussvorrichtung aus dem genannten Material während es erstarrt das Stielteil (2) der Bürstenkassette herzustellen, wobei die Bürstenkassette hergestellt wird, indem das Stielteil (2) mittels eines Extrusionsmechanismus mit dem Borstenteil (1) verbunden wird, **dadurch gekennzeichnet, dass** der Extrusionsmechanismus mit Hilfe eines Kalibrierelements (III), dessen Komplementärflächen (V) teilweise durch die gegenüberliegenden Seitenflächen (1'p) der Bürstenvorform (1') gebildet werden, ein zumindest teilweise hohles Stielteil (2) im querschnittlichen Sinne an den gegenüberliegenden Seiten des Borstenteils (1) produziert.

2. Ein Verfahren nach obigem Anspruch 1, **dadurch gekennzeichnet, dass** das Stielteil (2) sowohl bezüglich seines Kupplungselements (2a) als auch seines Stützelements (2b) hohl ausgeführt wird, indem zu Beginn der Extrusion ein Extrusionsprofil (M) verwendet wird, welches auf den gegenüberliegenden Seiten der Bürstenvorform (1') hohl (0) ist und mit Verschlussflächen (L) ausgestattet ist, mittels derer das Stielteil (2) an den gegenüberliegenden Seiten des Borstenteils (1) mit zwei separaten Aussparungen (01, 02) auf jeder Seite geformt wird, indem der äußere Rand des Extrusionsprofils (M) am Ende der Extrusion dagegen getrieben wird.

3. Ein Verfahren nach obigem Anspruch 1 oder 2, **dadurch gekennzeichnet, dass** die Borsten (1a), die das Borstenteil (1) bilden, zuerst zu einem Verschmelzungswiderstand (I) befördert werden, worin dieselben an ihrem einen Ende zusammengeschmolzen werden, wonach die entstandene Bürstenvorform (1') zu einem Extrudermatrizenelement (II) geleitet wird, in dem auf dem Verbindungsflansch (1's) der Bürstenvorform (1') ein Kunststoff-Vorform-Profil (M) extrudiert wird, welches Aussparungen (0) umfasst, die auf den gegenüberliegenden Seiten der Bürstenvorform (1') vorhanden sind und durch ein Stegelement (S) miteinander verbunden sind.

4. Ein Verfahren nach obigem Anspruch 3, **dadurch gekennzeichnet, dass** die von dem Kunststoff-Vorform-Profil (M) umgebene Bürstenvorform (1') zum Kalibrierelement (III) geleitet wird, worin innerhalb des Kunststoff-Vorform-Profils (M) ein Druck erzeugt wird, wobei das zur Zeit geschmolzene Kunststoff-Vorform-Profil (M) über seine äußere Hülle gegen die Komplementärflächen (V) des Kalibrierelements und über seinen inneren Teil gegen die Seitenflächen (1'p) der Bürstenvorform (1') komprimiert wird, und wobei der Verbindungsflansch (1's) der Bürstenvorform (1') sowie das Stegelement (S) der extrudierten Kunststoff-Profil-Vorform (M) zusammengeschweißt werden.

5. Ein Verfahren nach einem der obigen Ansprüche 2-4, **dadurch gekennzeichnet, dass** die Komplementärfläche im ersten Abschnitt (V; V1) des Kalibrierelements (III) vorzugsweise für eine Konfiguration komplementär zur extrudierten Kunststoff-Profil-Vorform (M) und in dessen Endabschnitt für eine verengte Konfiguration (V; V2) konzipiert ist, um auf den gegenüberliegenden Seiten des Borstenteils (1) die zweiteilige Gehäusestruktur (01, 02) des Stielteils (2) zu bilden.

6. Ein Verfahren nach einem der obigen Ansprüche 3-5, **dadurch gekennzeichnet, dass** das Kalibrierelement (III) mit Kühlung versehen ist, in deren Folge die Kunststoff-Profil-Vorform (M), die gegen die in dieser vorhandenen Komplementärflächen (V) drückt, und der Verbindungsflansch (1's) der Bürstenvorform (1'), der mit seinem Stegelement (S) verschmilzt, vorzugsweise gefördert durch die wasser- oder luftgekühlten Komplementärflächen (V1, V2) auf ihre gewünschte Konfiguration gekühlt werden.

7. Ein Verfahren nach einem der obigen Ansprüche 1-6, **dadurch gekennzeichnet, dass** die Extrusion unter Verwendung wassergekühlter Überdrucktechnologie ausgeführt wird, indem komprimierte Luft über im Kalibrierelement (III) vorhandene Injektionsöffnungen (R) in das Innere der Kunststoff-Profil-Vorform (M) eingespeist wird und diese mit einem im Kalibriermechanismus enthaltenen als Flusskanalsystem (W) ausgeführten Wasserkreislauf gekühlt wird.

8. Ein Verfahren nach einem der obigen Ansprüche 1-7, **dadurch gekennzeichnet, dass** das Borstenteil (1) und das Stielteil (2), die in der Bürstenkassette enthalten sind, aus einem recyclingfähigen und im Wesentlichen aus einem einzelnen Herstellungsmaterial, wie beispielsweise Polypropylen oder ähnlichem, hergestellt sind.

9. Eine Bürstenkassette, die zusammen mit mehreren mit dieser übereinstimmenden dazu gedacht ist, eine Bürste zu bilden, die an einer in einer Kehrmaschine befindlichen Bürstenhalterung zu befestigen ist, wobei die genannte Bürstenkassette aus einem Borstenteil (1) und einem Stielteil (2) in einteiligem Aufbau aus einem Material auf Kunststoffbasis besteht, das genannte Stielteil die Borsten (1a) des Borstenteils (1) verbindet und erstens über ein eingebautes Stützelement (2a) zum Stützen der Borsten (1a) des Borstenteils und andererseits ein Kupplungselement (2b) zum Befestigen der Bürstenkassette an der Bürstenhalterung der Kehrmaschine verfügt, wobei die Bürstenkassette aus einer im Wesentlichen länglichen Bürstenvorform (1') hergestellt wird, wobei die darin befindlichen Borsten (1a) an ihren Enden miteinander verbunden und mit dem genannten Stielteil (2) vereinigt werden, und wobei das Stielteil (2) der genannten Bürstenkassette aus dem genannten Material auf Kunststoffbasis gebildet wird, welches in Kontakt mit dem Verbindungsflansch (1's) der Bürstenvorform (1') extrudiert wurde, **dadurch gekennzeichnet, dass** das Stielteil der genannten Bürstenkassette, zumindest was sein Kupplungselement (2b) betrifft, im querschnittlichen Sinne an den gegenüberliegenden Seiten des Borstenteils (1) hohl ist.

10. Eine Bürstenkassette nach obigem Anspruch 9, **dadurch gekennzeichnet, dass** das Stielteil (2) der Bürstenkassette, sowohl was sein Kupplungselement (2a) als auch sein Stützelement (2b) betrifft, hohl ist, da bei seiner Herstellung ein Extrusionsprofil (M) verwendet wird, welches auf den gegenüberliegenden Seiten hohl (0) und mit Verschlussflächen (L) ausgestattet ist, mittels derer das Stielteil (2) an den gegenüberliegenden Seiten des Borstenteils (1) mit zwei separaten Aussparungen (01, 02) auf jeder Seite geformt wird, indem der äußere Rand des Extrusionsprofils (M) gegen die Verschlussflächen getrieben und verschmolzen wird.

## Revendications

1. Méthode de fabrication d'une brosse à cassette étant conçue à fabriquer, à l'aide de plusieurs brosses homogènes, une brosse qui sera fixée au support de brosse de la balayeuse, ladite brosse à cassette comprenant un composant en soies (1) et un composant tige (2) formant une structure seule pièce composée d'un matériau à base de plastique, ledit composant tige reliant les soies (1a) du composant en soies (1) et incluant premièrement un support (2a) pour les soies (1a) du composant en soies (1) ainsi qu'un élément de couplage (2b) pour fixer la brosse à cassette au support de brosse de la balayeuse, la brosse à cassette étant fabriquée à partir d'une préforme de brosse (1') essentiellement allongée, les soies (1a) y étant assemblés par un procédé de fusion joignant leurs extrémités, ensuite, le matériau à base de plastique essentiellement dans un état d'écoulement est extrudé au contact de la collerette de fusion (1's) de la préforme de brosse (1') pour fabriquer le composant tige de brosse à cassette (2) à l'aide d'un moulage dudit matériau lors de sa solidification, où la brosse à cassette est fabriqué en reliant le composant tige (2) au composant en soies (1) à l'aide d'un mécanisme d'extrusion, **caractérisée en ce que** le mécanisme d'extrusion produit un composant tige (2) au moins partiellement creux entre les côtés opposés du composant en soies (1) via un élément de calibrage (III), ses surfaces complémentaires (V) étant partiellement formées des faces latérales opposées (1'p) de la préforme de brosse.

2. Méthode selon la revendication 1, **caractérisée en ce que** le composant tige (2) est creux, aussi bien au niveau de l'élément de couplage (2a) que du support (2b), en utilisant au début de l'extrusion un profil d'extrusion (M) creux (O) sur les côtés opposés de la préforme de brosse (1') et muni de faces de verrouillage (L), grâce auxquelles le composant tige (2) sera formée sur les côtés opposés du composant en soies (1) avec deux creux séparés (01, 02) de chaque côté contre lesquels le bord extérieur du profil d'extrusion (M) sera pressé à la fin de l'extrusion.

3. Méthode selon la revendication 1 ou 2, **caractérisée en ce que** les soies (1a) constituant le composant en soies (1) sont d'abord dirigées vers une résistance de fusion (I), où celles-ci fusionnent au niveau de leurs extrémités, après quoi la préforme de brosse obtenue (1') passe par une coquille d'extrusion (II) où, au sommet de la collerette de fusion de la préforme de brosse (1's), est extrudée une préforme de profil en plastique (M), constitué de creux (O) présents sur les côtés opposés de la préforme de brosse (1') et reliés les uns aux autres par un élément de toile (S).

4. Méthode selon la revendication 3, **caractérisée en ce que** la préforme de brosse (1') baguée à la préforme de profil en plastique (M) passe dans l'élément de calibrage (III), dans lequel une pression est générée à l'intérieur de la préforme de profil en plastique (M) qui, à ce moment-là en fusion (M), comprime sa face externe contre les surfaces complémentaires (V) de l'élément de calibrage et sa partie interne contre les faces latérales (1'p) de la préforme de brosse, et où la collerette de fusion (1's) de la préforme de brosse (1') ainsi que l'élément en toile (S) de la préforme de profil en plastique extrudé (M) sont soudés.

5. Méthode selon l'une quelconque des revendications 2 à 4, **caractérisée en ce que**, sur sa première section, la surface complémentaire (V ; V1) de l'élément de calibrage (III) est de préférence conçue pour une configuration complémentaire à la préforme de profil d'extrusion (M) et, sur sa section finale, pour une configuration contrainte (V ; V2), afin d'offrir au composant tige (2) une structure en deux parties (01, 02) sur les côtés opposés du composant en soies (1).

6. Méthode selon l'une quelconque des revendications 3 à 5, **caractérisée en ce que** l'élément de calibrage (III) est fourni avec un système réfrigérant, entraînant le refroidissement de la préforme de profil en plastique (M) pressant contre les surfaces complémentaires (V) et de la collerette de fusion (1's) de la préforme de brosse (1') fondant dans l'élément de toile (S), favorisé par les surfaces complémentaires (V1, V2) refroidies par l'eau ou l'air, ce qui permet d'obtenir la configuration souhaitée.

7. Méthode selon l'une quelconque des revendications 1 à 6, **caractérisée en ce que** l'extrusion se fait grâce à une technologie de surpression refroidie par l'eau en introduisant de l'air comprimé à l'intérieur de la préforme de profil en plastique (M) à travers des trous d'injection (R) présents dans l'élément de calibrage (III) et en le refroidissant avec une circulation d'eau mise en place via un système de canal de coulée (W) inclus dans le mécanisme de calibrage.

8. Méthode selon l'une quelconque des revendications 1 à 7, **caractérisée en ce que** le composant en soies (1) et le composant tige (2), compris dans la brosse à cassette, sont fabriqués principalement à partir d'un seul matériau de fabrication recyclable, tel que le polypropylène ou un matériau similaire.

9. Brosse à cassette étant conçue à fabriquer, à l'aide de plusieurs brosses homogènes, une brosse qui sera fixée au support de brosse de la balayeuse, ladite brosse à cassette comprenant un composant en soies (1) et un composant tige (2) formant une structure seule pièce composée d'un matériau à base de plastique, ledit composant tige reliant les soies (1a) du composant en soies (1) et incluant premièrement un support (2a) pour les soies (1a) du composant en soies (1) ainsi qu'un élément de couplage (2b) pour fixer la brosse à cassette au support de brosse de la balayeuse, la brosse à cassette étant fabriquée à partir d'une préforme de brosse (1') essentiellement allongée, les soies (1a) y étant reliées par leurs extrémités et combinées au composant tige (2), ledit composant tige (2) de la brosse à cassette étant composée dudit matériau à base de plastique préalablement extrudé au contact de la collerette de fusion (1's) de la préforme de brosse (1'), **caractérisée en ce que** le composant tige de ladite brosse à cassette est creux, du moins au niveau de son élément de couplage (2b) entre les côtés opposés du composant en soies (1).

10. Brosse à cassette selon la revendication 9, **caractérisée en ce que** le composant tige (2) de la brosse à cassette est creux, tant au niveau de son élément de couplage (2a) que de son support (2b), grâce à l'utilisation d'un profil d'extrusion (M) lors de sa fabrication, lequel profil est creux (0) sur les côtés opposés et dotés de faces de verrouillage (L) grâce auxquelles le composant tige (2) est formée, sur les côtés opposés du composant en soies (1), de deux creux séparés (01, 02) de chaque côté par la pression et la fusion du bord extérieur du profil d'extrusion (M) contre les faces de verrouillage (L).
